# EUROPÄISCHE PATENTANMELDUNG

(11) **EP 0 682 049 A1**
(43) Veröffentlichungstag der Anmeldung: **15.11.1995**
(21) Anmeldenummer: 95106600.0
(22) Anmeldetag: 02.05.1995
(51) Int. Cl.: C08G 18/12, C08G 18/32, C08G 18/38, C08G 18/28, C08G 18/66, C08G 18/08, C08J 3/03

(54) **Hydrophile Polyurethan-Polyharnstoffe und deren Verwendung als Dispergiermittel für Kunstharze**

(30) Priorität: 09.05.1994 DE 4416336
(71) Anmelder: HOECHST AKTIENGESELLSCHAFT, D-65926 Frankfurt am Main (DE)
(72) Erfinder: Merten, Gerhard, D-65205 Wiesbaden (DE); Zöller, Joachim, Dr., D-55128 Mainz (DE); Urbano, Edmund, Dr., A-8044 Graz (AT)

(57) **Zusammenfassung**

Hydrophile Polyurethan-Polyharnstoffe erhältlich durch Umsetzung von:
(A) einer Polyisocyanatkomponente, bestehend aus mindestens einem organischen Polyisocyanat,
(B) mindestens einem mit Isocyanaten reaktiven Fettsäurederivat
(C) gegebenenfalls einer Verbindung mit mehr als zwei funktionellen Gruppen ausgewählt aus Hydroxyl- und Carboxyl-Gruppen,
(D) einer Polyalkylenglykol-Komponente des Molmassenbereichs von 500 bis 10 000 g/mol und
(E) einer Verbindung mit mindestens einem aktiven Wasserstoffatom, das mit NCO-Gruppen schneller reagiert als Wasser,
unter Einhaltung eines Molverhältnisses von Isocyanat-Gruppen zur Summe von Wasserstoffatomen der Hydroxy- und Amino-Gruppen, bezogen auf alle Ausgangskomponenten (A) bis (E), von 0,5:1 bis 2:1.

## Beschreibung

Die vorliegende Erfindung betrifft hydrophile Polyurethan-Polyharnstoffe und deren Verwendung als Emulgatoren in wäßrigen Dispersionen von hydrophoben Kunstharzen.

Die Palette der wasserverdünnbaren Bindemittelsysteme ist derzeit noch unvollständig, so daß ein Ersatz aller konventionellen Anstrichmittel heute noch nicht möglich ist. Vor allem die lufttrocknenden Alkydharze, die allgemein in Form von Lösungen in aliphatischen oder aromatischen Kohlenwasserstoffen zur Anwendung kommen, können derzeit noch nicht vollwertig ersetzt werden. Filme aus wäßrigen Dispersionen von Polymerisaten (z.B. auf Basis von Polyvinylacetat, Polyolefinen oder Polyacrylaten) erreichen weder im optischen Eindruck (Verlauf, Glanz) noch in ihrer Schutzwirkung (Wasserfestigkeit, Witterungsbeständigkeit) annähernd den Qualitätsstandard der herkömmlichen Alkydharze. Auch wasserlösliche Alkydharze für lufttrocknende Lacke haben sich bisher nicht durchsetzen können. Das liegt zum Teil daran, daß im Interesse der Wasserlöslichkeit die mittlere Molmasse der Harze gesenkt werden muß, woraus sich zwangsläufig eine Verzögerung der Trocknung ergibt. Außerdem benötigen diese Harze trotz der niederen Molmasse relativ große Mengen von Hilfslösungsmitteln (z. B. Glykoläther, auch toxische Lösungsmittel) und organischen Aminen.

Demgegenüber sollten wäßrige Dispersionen von Kunstharzen, insbesondere Alkydharzen eine ideale Lösung des Problems ermöglichen: Auf organische Lösungsmittel kann hier im allgemeinen verzichtet werden, und die Trocknungseigenschaften würden denen der konventionell gelösten Harze entsprechen, da eine Begrenzung der Molmasse wie bei den wasserlöslichen Harzen nicht erforderlich ist. Trotzdem haben auch solche Kunstharzdispersionen bisher keine große Bedeutung erlangt, da es bisher nicht gelungen ist, das Problem der Stabilisierung der Dispersionen ohne Beeinträchtigung der anderen Eigenschaften zu lösen.

Kunstharze, insbesondere Alkydharze, sind überwiegend hydrophobe Substanzen, die von sich aus keine stabile Dispersionen in Wasser bilden. Deshalb müssen Emulgatoren zugesetzt werden. Emulgatoren sind im allgemeinen Substanzen mit amphiphatischem Molekülaufbau, d.h. sie bestehen aus einem hydrophoben und einem hydrophilen Molekülteil. Infolge dieses Aufbaus reichern sich die Emulgatormoleküle in der Grenzschicht Wasser/Harz an, setzen die Grenzflächenspannung herab und ermöglichen damit die Bildung feinster Harztröpfchen in der wäßrigen Phase.

Daher war die der Erfindung zugrundeliegende Aufgabe, Emulgatoren zu entwickeln, die hydrophobe Kunstharze in Form von Dispersionen in Wasser stabilisieren können und die die Eigenschaften der nach dem Trocknen gebildeten Filme insbesondere in Bezug auf Glanz, Trocknung, Wetter- und Wasserfestigkeit nicht negativ beeinflussen.

Die Synthese von hochmolekularen Polyurethan-Polyharnstoffen durch Kettenverlängerung in der wäßrigen Phase ist bekannt und in allgemeiner Form z.B. in der DE-A 26 24 442 sowie in der EP-A 0 089 497 beschrieben. Die Eignung von bestimmten Polyurethan-Polyharnstoffen als Emulgatoren war jedoch nicht bekannt.

Bisher hat man bei Kunstharz-Dispersionen die besten Ergebnisse mit nichtionischen Emulgatoren erzielt, die durch Kondensation von Äthylenoxid an Octyl- oder Nonylphenol entstehen, d.h. bei denen der hydrophobe Teil aus dem Alkylphenolrest und der hydrophile Teil aus der Polyäthylenglykolkette besteht. Solche Systeme werden in den US-Patentschriften 3 223 658, 3 269 967, 3 440 193 bzw. der DDR-Patentschrift 88 833 und der DE-A 27 54 091 beschrieben. Mit derartigen Emulgatoren bekommt man bei Zusatzmengen von 5 bis 10 % Kunstharz-Dispersionen mit brauchbarer Stabilität. Der Nachteil besteht darin, daß diese Emulgatoren unverändert im Film verbleiben und damit eine wesentliche Verringerung der Wasserfestigkeit bewirken. Die Anwendungsmöglichkeit derartiger Dispersionen ist daher sehr beschränkt.

Die DE-A 39 00 257 beschreibt nichtionisch hydrophile Polyurethane mit (Meth)Acryloylgruppen und deren Verwendung als reaktive Emulgatoren für in Wasser nicht dispergierbare Urethan(meth)acrylate. Mit diesen Emulgatoren sind jedoch nur eine begrenzte Anzahl von Kunstharzen emulgierbar; so sind sie offenbar wegen der mangelnden Verträglichkeit nicht in der Lage, styrolfreie ungesättigte Polyester- oder Alkydharze zu emulgieren.

Die DE-A 40 04 651 beschreibt lufttrocknende Polyurethanharze, die sowohl Polyole wie auch Monoalkohole mit mehrfach ungesättigten Gruppen enthalten. In diese können bis zu 40 % konventionelle Alkydharze einemulgiert werden. In den deutschen Patentschriften DE 27 54 141, 27 54 092 und 24 40 946 werden Alkydharzdispersionen beschrieben, die in der wäßrigen Phase mit Hilfe von Emulgatoren stabilisiert werden, die Polyäthylenglykole, Fettsäuren und/oder Allyläther enthalten.

Olefinisch ungesättigte Polyurethane, die eine β,γ-äthylenisch ungesättigte Ätheralkohol-Komponente enthalten, werden in der EP-A 0 501 247 beschrieben, ebenso deren Verwendung als reaktive Emulgatoren. Sie werden hauptsächlich als Emulgatoren für ungesättigte Polyesterharze eingesetzt, sind jedoch für Alkydharze ungeeignet. Diese Emulgatoren können durch ihre Doppelbindungen in den Film während der oxidativen Trocknung eingebaut werden. Dadurch wird die Wasserfestigkeit verbessert. Die niedrige Molmasse dieser Emulgatoren erlaubt aber dennoch eine beschränkte Migration der Emulgatoren im Film, wodurch die Eigenschaften des gebildeten Filmes leiden.

Ein weiteres Problem dieser Alkydharzemulsionen ist neben der langsamen Trocknung die schlechte Pigmentierbarkeit, da mit den oben beschriebenen Emulsionen keine glänzenden hochpigmentierten Filme erhalten werden können.

Aufgabe der vorliegenden Erfindung war es daher, solche wäßrigen Kunstharz-Dispersionen bereitzustellen, die gegenüber dem bekannten Stand der Technik verbesserte Trocknungseigenschaften, Pigmentierbarkeit und Lagerstabilität aufweisen.

Diese Aufgabe konnte mit der Bereitstellung der erfindungsgemäßen hydrophilen Polyurethan-Polyharnstoffe und deren erfindungsgemäßer Verwendung gelöst werden.

Gegenstand der Erfindung sind hydrophile Polyurethan-Polyharnstoffe erhältlich durch Umsetzung von:
(A) einer Polyisocyanatkomponente, bestehend aus mindestens einem organischen Polyisocyanat,
(B) mindestens einem mit Isocyanaten reaktiven Fettsäurederivat
(C) gegebenenfalls einer von (B), (D) und (E) verschiedenen Verbindung mit mehr als zwei funktionellen Gruppen ausgewählt aus Hydroxyl- und Carboxyl-Gruppen,
(D) einer Polyalkylenglykol-Komponente des Molmassenbereichs von 500 bis 10 000 g/mol und
(E) einer Verbindung mit mindestens einem aktiven Wasserstoffatom, das mit NCO-Gruppen schneller reagiert als Wasser,
unter Einhaltung eines Molverhältnisses von Isocyanat-Gruppen zur Summe von Wasserstoffatomen der gegenüber Isocyanat reaktiven Gruppen, bezogen auf alle Ausgangskomponenten (A) bis (E), von 0,5:1 bis 2:1, bevorzugt 0,7:1 bis 1,5:1.

Gegenstand der Erfindung ist auch die Verwendung von wäßrigen Dispersionen dieser erfindungsgemäßen Polyurethan-Polyharnstoffe als reaktive Emulgatoren für ansonsten in Wasser nicht dispergierbare Kunstharze bei der Herstellung von wäßrigen Dispersionen aus diesen Kunstharzen.

Als Kunstharze werden bevorzugt handelsübliche Alkydharz-Typen eingesetzt, die unter Umständen zur Erhöhung der Lagerstabilität geringfügig modifiziert werden. In der Regel werden die Harze bei der Herstellung der Dispersionen im lösungsmittelfreiem Zustand eingesetzt, es können aber geringere Mengen Lösungsmittel (bis zu 10 % der Masse des Harzes, bevorzugt unter 5 %, besonders bevorzugt unter 2 %) zugesetzt werden. Zur Erhöhung der Lagerstabilität kann das Alkydharz so modifiziert werden, daß es möglichst geringe Säurezahlen aufweist. Diese Modifizierung kann einerseits während der Herstellung des Alkydharzes erfolgen durch Veresterungen mit weiteren Alkoholen, andererseits können die Säuregruppen auch nachträglich mit Hilfe eines Epoxids verestert werden. Als Epoxidverbindungen kommen alle Monoepoxide in Frage, die beispielsweise in dem Handbuch "Epoxidverbindungen und Epoxidharze" von A.M. Paquin, Springer Verlag, Berlin 1958, Kapitel IV, und in Lee Neville "Handbook of Epoxy Resins ", 1967, Chapter 2 beschrieben sind. Besonders geeignet sind epoxidierte Fettsäuren sowie ®Cardura E10 (Versaticsäureglycidylester der Shell Chemie).

Die erfindungsgemäßen Polyurethan-Polyharnstoffe lassen sich durch Umsetzung der bereits obengenannten Ausgangskomponenten (A) bis (E) herstellen, wobei vorzugsweise pro Mol der Komponente (A) 0,1 bis 1 Mol der Komponente (B), 0 bis 0,8 Mol der Komponente (C), 0,1 bis 0,8 Mol der Komponente (D) und 0,01 bis 0,3 Mol der Komponente (E) zum Einsatz gelangen. Besonders bevorzugt werden je 1 Mol der Komponente (A) 0,2 bis 0,6 Mol der Komponente (B), 0 bis 0,6 Mol der Komponente (C), 0,2 bis 0,6 Mol der Komponente (D) und 0,02 bis 0,25 Mol der Komponente (E) eingesetzt.

Die Komponente (A) besteht aus mindestens einem organischen Polyisocyanat. Für die Erfindung geeignete Polyisocyanate sind aliphatische, cycloaliphatische und/oder aromatische Polyisocyanate mit mindestens zwei Isocyanatgruppen pro Molekül und mit einer Molmasse von 168 bis 1 000 g/mol, vorzugsweise 168 bis 300 g/mol. Bevorzugt sind Verbindungen mit zwei bis vier Isocyanatgruppen pro Molekül, besonders bevorzugt mit zwei bis drei Isocyanatgruppen pro Molekül. Es können auch Mischungen unterschiedlicher Polyisocyanate verwendet werden, wobei auch Polyisocyanate unterschiedlicher Funktionalität gemischt werden können. Vorzugsweise werden Diisocyanate verwendet, die bis zu einem molaren Gehalt von 20 % höherfunktionelle Isocyanate als weiteren Mischungsbestandteil enthalten können. Als aromatische Polyisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethandiisocyanat, Diphenyltetraisocyanat, bevorzugt Naphthyltetraisocyanat, Toluylen- und Xylylendiisocyanat. Beispiele für cycloaliphatische Polyisocyanate sind Isophorondiisocyanat (1-Isocyanato-3,3,5-trimethyl-5-isocyanatomethyl-cyclohexan, "IPDI"), Cyclopentylendiisocyanat, sowie die Hydrierungsprodukte der aromatischen Diisocyanate wie Cyclohexylendiisocyanat, Methylcyclohexylendiisocyanat und Dicyclohexylmethan-diisocyanat. Beispiele für aliphatische Polyisocyanate sind Diisocyanate der allgemeinen Formel

O = C = N - (C R₂ )ᵣ - N = C = O

worin r eine ganze Zahl von 2 bis 20, insbesondere 6 bis 8 ist und R Wasserstoff oder einen niedrigen Alkylrest mit 1 bis 8 C-Atomen, vorzugsweise 1 oder 2 C-Atomen bedeutet. Beispiele hierfür sind Trimethylendiisocyanat, Tetramethylendiisocyanat, Pentamethylendiisocyanat, Hexamethylendiisocyanat, Propylendiisocyanat, Äthyläthylendiisocyanat, Dimethyläthylendiisocyanat, Methyltrimethylendiisocyanat und Trimethylhexandiisocyanat. Besonders bevorzugt werden Diphenylmethan- und Toluylendiisocyanat, und deren Isomerengemische sowie Isophorondiisocyanat, Dicyclohexylmethan-diisocyanat, Trimethylendiisocyanat, Tetramethylendiisocyanat und Hexamethylendiisocyanat. Vinylpolymerisate, die Isocyanatgruppen enthalten und durch Copolymerisation von z. B. Cyanatoäthyl(meth)acrylat oder Dimethyl-isopropylbenzylisocyanat mit Alkyl(meth)acrylaten und/oder (Alkyl)vinylbenzolen entstehen, können auch verwendet werden. Ebenso sind gemischte aliphatisch/aromatische Isocyanat-Verbindungen geeignet. Ein Beispiel für eine besonders bevorzugte Verbindung ist Tetramethylxylylen-diisocyanat.

Diisocyanate der beispielhaft genannten Art sind als Komponente (A) bevorzugt, jedoch sind auch höherfunktionelle Polyisocyanate wie beispielsweise biuret-, isocyanurat- oder urethanmodifizierte Polyisocyanate auf Basis der genannten einfachen Diisocyanate geeignet. Diese Derivate weisen im allgemeinen eine Molmasse bis zu 1 000 g/mol auf.

Die Herstellung derartiger Derivate ist beispielsweise in US-PS 3 124 605, US-PS 3 183 112, US-PS 3 919 218 oder US-PS 4 324 879 beschrieben.

Das gegenüber Isocyanaten reaktive Fettsäurederivat (B) enthält 10 bis 40 Kohlenstoffatome, mindestens eine Hydroxyl- oder Aminogruppe und gegebenenfalls mindestens eine C = C - Doppelbindung. Die Zahl der funktionellen Gruppen beträgt eins bis vier, bevorzugt eins bis zwei. Beispiele dieser Fettsäurederivate sind Fettalkohole, wie z.B. Laurylalkohol, Stearylalkohol, Oleylalkohol, Linoleylalkohol oder Linolenylalkohol. Es können auch oxäthylierte Fettalkohole eingesetzt werden, die 1 bis 30, vorzugsweise 1 bis 10 Äthylenoxideinheiten enthalten, wie zum Beispiel ®Genapol O-020 (Hoechst AG). Weiterhin sind die Alkohole zu nennen, die durch eine Umsetzung von einer ungesättigten Säure und einem Epoxid erhalten werden, wie zum Beispiel von einer Fettsäure wie Leinölfettsäure oder Sojaölfettsäure mit einem Epoxid wie ®Cardura E10 oder anderen Epoxiden. Es können auch Teilester von Polyhydroxyverbindungen, wie beispielsweise Glycerin, Trimethylolpropan oder Pentaerythrit sowie partiell hydrolysierte Fette eingesetzt werden wie zum Beispiel ®Ligalub 40/1 (Fettsäureglycerinmonoester von P. Graeven Fettchemie). Des weiteren kommen auch die Fettamine wie zum Beispiel ®Genamin (Hoechst AG) in Frage.

Die höherfunktionelle Komponente (C) enthält 3 bis 8, besonders bevorzugt 3 bis 6 Hydroxyl- und/oder Carboxylgruppen. Dabei können solche Verbindungen verwendet werden, die nur Hydroxygruppen enthalten. Geeignet sind z.B. Trimethylolpropan, Trimethyloläthan, Glycerin, Ditrimethylolpropan, Pentaerythrit und Dipentaerythrit. Andere geeignete Verbindungen enthalten mindestens eine, bevorzugt ein bis drei und besonders bevorzugt ein bis zwei Hydroxygruppen und mindestens eine, bevorzugt ein bis drei und besonders bevorzugt ein bis zwei Carboxylgruppen. Geeignete Hydroxycarbonsäuren sind z.B. Dimethylolpropionsäure, Glykolsäure, Äpfelsäure, Weinsäure, Tartronsäure, Citronensäure und 2,6-Dihydroxybenzoesäure. Ebenso können auch Mischungen zweier oder mehrerer dieser Verbindungen verwendet werden.

Bei der Komponente (D) handelt es sich um lineare Polyalkylenätherglykole mit einer als Zahlenmittel bestimmten Molmasse von 500 bis 10 000, vorzugsweise 1 000 bis 6 000 g/mol. Bevorzugt sind Polyalkylenätherglykole, deren molarer Gehalt an Äthylenoxideinheiten mindestens 80 %, vorzugsweise bis 100 % der Alkylenoxideinheiten beträgt. Derartige "gemischte" Polyalkylenglykole entstehen beispielsweise durch Verwendung von Gemischen verschiedener Alkylenoxide, beispielsweise von Äthylenoxid und Propylenoxid im Molverhältnis von circa 8 zu 2, bei der Herstellung der Polyätherglykole durch Alkoxylierung geeigneter zweiwertiger Startermoleküle wie beispielsweise Wasser, Äthylenglykol oder Propylenglykol.

Als Komponente (E) werden solche Verbindungen eingesetzt, die auch als "Kettenverlängerer" bezeichnet werden. Die funktionellen Gruppen dieser Verbindungen können Hydroxygruppen, primäre und sekundäre Aminogruppen und Mercaptogruppen sein. Die Anzahl der funktionellen Gruppen beträgt mindestens eins, bevorzugt zwei bis vier und besonders bevorzugt zwei bis drei. Die geeigneten Verbindungen können lediglich eine Art von funktionellen Gruppen tragen, oder unterschiedliche funktionelle Gruppen im selben Molekül. Als Beispiel seien primäre und sekundäre Amine, Hydrazin und substituierte Hydrazine genannt mit mindestens zwei gegenüber Isocyanat reaktiven Wasserstoffatomen. Besonders bevorzugt sind Di- und Polyamine wie z.B. Äthylendiamin, Butylendiamin, Toluylendiamin, Isophorondiamin, 3,3'-Dichlorbenzidin, Triäthylentetramin, Diäthylentriamin, Hydrazin und substituierte Hydrazine wie Dimethylhydrazin. Weitere geeignete Kettenverlängerer, die unterschiedliche funktionelle Gruppen tragen, sind zum Beispiel Alkanolamine wie N-Aminoäthyläthanolamin, Äthanolamin und Diäthanolamin. Es können auch Carbonsäuregruppen enthaltende Amine oder Hydrazinderivate wie zum Beispiel Lysin, Glutaminsäure und Adipinsäuremonohydrazid verwendet werden. Ebenso können auch Mischungen solcher Verbindungen verwendet werden.

Die Herstellung der erfindungsgemäßen hydrophilen Polyurethan-Polyharnstoffe erfolgt vorzugsweise in zwei Stufen. Zunächst wird ein hydrophiles isocyanatfunktionelles Präpolymer synthetisiert, das dann nach der Dispergierung in Wasser mit den unter (E) beschriebenen Kettenverlängerern umgesetzt wird.

Die Herstellung des Präpolymers durch Umsetzung der genannten Ausgangskomponenten (A) bis (D) kann in Substanz oder in gegenüber Isocyanatgruppen inerten Lösungsmitteln wie Ketonen, tertiären Alkoholen, Äthern oder Estern wie beispielsweise Aceton, Methyläthylketon, Äthylacetat, Butylacetat, Toluol oder Gemischen derartiger Lösungsmittel erfolgen, wobei vorzugsweise Reaktionstemperaturen von 20 bis 200 °C, insbesondere von 50 bis 150 °C, eingehalten werden. Dabei können die Komponenten (B) bis (D) gleichzeitig oder schrittweise mit der Komponente (A) zur Reaktion gebracht werden. In der Praxis kann somit beispielsweise so vorgegangen werden, daß die Komponenten (B) bis (D) vorgelegt und innerhalb der obengenannten Temperaturbereiche mit dem Isocyanat (A) umgesetzt wird, bis der NCO-Gehalt auf einen bestimmten, zu berechnenden Wert abgefallen ist.

Dieses Präpolymer wird dann in Wasser dispergiert und bei Temperaturen von 40 bis 100 °C mit der Komponente (E) zur Reaktion gebracht. Nach einer Reaktionszeit von 1 bis 5 Stunden erhält man dann gegebenenfalls nach Zugabe von Ammoniak oder Aminen die wäßrige Dispersion des Polyurethan-Polyharnstoffs.

Grundsätzlich werden hierbei Art und Mengenverhältnisse der Ausgangskomponenten innerhalb der genannten Bereiche so gewählt, daß das Verhältnis der Zahl der Isocyanatgruppen zur Zahl der Wasserstoffatome in Hydroxygruppen und Aminogruppen in den Komponenten (A) bis (D) von 0,5:1 bis 2:1, bevorzugt 0,7:1 bis 1,5:1 gewährleistet ist.

Die Urethanbildungsreaktionen können in an sich bekannter Weise z.B. mit Zinnoctoat, Dibutylzinndilaurat oder tertiären Aminen katalysiert werden. Ebenso kann das Polyurethan durch Zugabe geeigneter Inhibitoren und Antioxydantien von je 0,001 bis 0,3 %, bezogen auf Masse der Gesamtmischung, vor vorzeitiger und unerwünschter Polymerisation bzw. Oxidation geschützt werden.

Die auf diese Weise erhaltenen hydrophilen, gegebenenfalls ungesättigte Gruppen tragenden Polyurethan-Polyharnstoffe haben eine zahlenmittlere Molmasse (nach der Methode der Gelpermeationschromatographie unter Verwendung von Polystyrol als Standard ermittelbar) Mₙ von 2 000 bis 20 000, vorzugsweise 2 000 bis 15 000 g/mol, einen Massengehalt an olefinischen Doppelbindungen (berechnet als -C = C-, Molmasse = 24 g/mol) von 0 bis 6 %, vorzugsweise 1 bis 4 % und einen Massengehalt an über Polyäthylenglykol eingebauten Äthylenoxideinheiten -CH₂-CH₂-O- von 20 bis 90 %, vorzugsweise 30 bis 85 % und besonders bevorzugt 40 bis 80 %.

Diese hydrophilen Polyurethan-Polyharnstoffe sind wertvolle Emulgatoren für hydrophobe, in Wasser nicht dispergierbare Kunstharze. Solche Kunstharze haben z.B. eine zahlenmittlere Molmasse (bestimmt wie oben) Mₙ von 500 bis 10 000, vorzugsweise 500 bis 5 000 g/mol.

Zur Herstellung solcher Kunstharzdispersionen werden zunächst diese Kunstharze mit den oben beschriebenen Polyurethan-Polyharnstoff-Dispersionen gemischt, gegebenenfalls in Anwesenheit der oben beschriebenen inerten Lösungsmittel. In den Gemischen liegen 20 bis 97, vorzugsweise 40 bis 95 Gew.-Teile der oben bezeichneten hydrophoben Kunstharze in Abmischung mit 3 bis 80, vorzugsweise 5 bis 60 Gew.-Teilen der genannten, als Emulgatoren wirkenden, hydrophilen Polyurethan-Polyharnstoffen vor. Es ist jedoch wichtig, Art und Mengenverhältnisse der Einzelkomponenten im Rahmen der gemachten Ausführungen so zu wählen, daß der Massengehalt der in Wasser dispergierbaren Gemische an von der Komponente (D) herrührenden Äthylenoxideinheiten maximal 20, vorzugsweise maximal 15 %, beträgt. Die Herstellung der Gemische kann durch einfaches Abmischen der Einzelkomponenten, gegebenenfalls in Gegenwart von weiteren Lösungsmitteln, wie zum Beispiel Kohlenwasserstoffen, Alkoholen, Ketonen, Glykoläthern oder N-Methylpyrrolidon, erfolgen.

Zur Herstellung der erfindungsgemäßen wäßrigen Kunstharzdispersionen werden die erfindungsgemäßen Gemische in Wasser dispergiert, was sowohl durch einfaches Einrühren von Wasser in die vorgelegte Mischung der Kunstharze mit den Polyurethan-Polyharnstoff-Dispersionen mittels üblicher Dissolver, wie auch durch Eingießen der Mischung in Wasser unter heftigem Rühren erfolgen kann. Gegebenfalls kann zunächst ein Teil des Wassers zu der oben beschriebenen Mischung gegeben werden und dann diese Mischung unter Rühren in die Restmenge Wasser gegossen werden. Auf diese Weise können stabile Öl-in-Wasser-Emulsionen erhalten werden.

Die mit Hilfe dieser Emulgatoren hergestellten wäßrigen Dispersionen können bis zu 60 % Feststoff-Massengehalt aufweisen. Üblicherweise liegen die Gehalte zwischen 25 und 55 %.

Die auf diese Weise erhaltenen wäßrigen Dispersionen sind wertvolle wäßrige Bindemittel für Überzugsmittel. Sie können als solche oder in Kombination mit den aus der Lacktechnologie bekannten Hilfs- und Zusatzmitteln wie z.B. Füllstoffen, Pigmenten, Lösungsmitteln, Verlaufshilfsmitteln zur Herstellung von Beschichtungen auf beliebigen Substraten verwendet werden.

Geeignete Substrate sind beispielsweise Papier, Kartonage, Leder, Holz, Kunststoffe, Vlies, Folien, Textilien, keramische Materialien, mineralische Materialien, Glas, Metall, beschichtetes Metall, Kunstleder und fotografische Materialien wie z.B. mit fotografischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie von gegebenenfalls mitverwendeten inerten Lösungsmitteln kann die Vernetzung der Überzüge z.B. durch Härtung mit Metallsalzen von Sikkativsäuren und (Hydro)-Peroxiden oder anderen Sikkativen bei Temperaturen zwischen Raumtemperatur und 250 °C erfolgen.

In den nachfolgenden Beispielen sind alle Mengenangaben als Massen und alle Prozentangaben als Massengehalte zu lesen.

### Beispiele

### Herstellung der Polyurethan-Polyharnstoff-Dispersionen

### Beispiel E1

56 g Leinölfettsäure und 52 g ®Cardura E10 (Glycidylester der Neodecansäure) werden bei 120 °C zur Reaktion gebracht (Katalysator: Chromoctoat), bis eine Särnrezahl von < 1 mg KOH / g erreicht ist (Rohstoff III). 54 g Dimethylolpropionsäure werden bei ca. 80 °C in 200 g Polyäthylenglykol 1000 gelöst. Zu der Lösung gibt man 100 g ®Solvesso 100 (Mischung verzweigter aliphatischer Kohlenwasserstoffe mit mittlerem Siedebereich) und den Rohstoff III. Nach Erwärmen auf 80 °C werden dann 98 g Tetramethylxylylendiisocyanat (TMXDI) und 70 g Toluylendiisocyanat so zugetropft, daß eine Temperatur von 85 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange, bis der Isocyanatgehalt auf 1,59 % gefallen ist. Dann wird unter heftigem Rühren 1400 g erwärmtes entionisiertes Wasser innerhalb von 10 Minuten zugegeben. Direkt im Anschluß werden 7,5 g Triäthylentetramin, gelöst in 75 g Wasser, schnell (ca. 5 min) zugetropft. Nach einer Reaktionszeit von 3 Stunden bei 80 °C werden 5 ml 25%ige Ammoniaklösung zugegeben, danach wird abgekühlt. Man erhält eine pastöse Dispersion.

### Beispiel E2

14 g Dimethylolpropionsäure werden bei ca. 80 °C in 100 g Polyäthylenglykol 1000 suspendiert. Zu der Suspension gibt man 100 g Solvesso 100 und 59 g Genapol O-100 (äthoxylierter Fettalkohol). Nach Erwärmen auf 70 °C werden dann 27 g Tetramethylxylylendiisocyanat (TMXDI) und 35 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange, bis der Isocyanatgehalt auf 1,7 % gefallen ist. Dann wird unter heftigem Rühren 500 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach einer Reaktionszeit von 3 Stunden bei 80 °C wird 5 ml 25%ige Ammoniaklösung zugegeben und abgekühlt. Man erhält eine pastöse Dispersion.

### Beispiel E3

59 g Genapol O 100 werden mit 200 g Polyäthylenglykol 2000 gemischt und auf 70 °C erwärmt. Zu der Lösung gibt man 100 g Solvesso 100. Nach Erwärmen auf 70 °C wird dann 54 g Tetramethylxylylendiisocyanat (TMXDI) so zugetropft, daß eine Temperatur von 70 °C nicht überschritten wird (ca. 30 min). Hat man alles TMXDI zugetropft, so läßt man eine Stunde bei der Temperatur nachrühren und steigert dann die Reaktionstemperatur auf 90 °C. Man hält die Temperatur solange, bis der Isocyanatgehalt auf 1,4 % gefallen ist. Dann wird unter heftigem Rühren 500 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach einer Reaktionszeit von 3 Stunden bei 80 °C wird abgekühlt. Man erhält eine pastöse Dispersion.

### Beispiel E4

14 g Dimethylolpropionsäure werden bei ca. 80 °C in 100 g Polyäthylenglykol 1000 suspendiert. Zu der Suspension gibt man 100 g Solvesso 100 und 59 g Genapol O-100 (äthoxylierter Fettalkohol). Nach Erwärmen auf 70 °C wird dann 27 g Tetramethylxylylendiisocyanat (TMXDI) und 35 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange, bis der Isocyanatgehalt auf 1,7 % gefallen ist und gibt 100 g Solvesso 100 zu. Dann wird unter heftigem Rühren 500 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach einer Reaktionszeit von 3 Stunden bei 80 °C wird 5 ml 25%ige Ammoniaklösung zugegeben und abgekühlt. Man erhält eine pastöse Dispersion.

### Beispiel E5

27 g Dimethylolpropionsäure werden bei ca. 80° C in 100g Polyäthylenglykol 1000 suspendiert. Zu der Suspension gibt man 50g Solvesso 100 und 27 g Genamin OL 100 ( Fettamin ). Nach Erwärmen auf 70° C wird dann 51,2 g Tetramethylxylylendiisocyanat (TMXDI) und 37 g Toluylendiisocyanat (TDI) so zugetropft, daß eine Temperatur von 70° C nicht überschritten wird (ca. 30 min). Hat man alles Isocyanat zugetropft, so läßt man eine Stunde bei der Temperatur nachrühren und steigert dann die Reaktionstemperatur auf 90° C. Man hält die Temperatur solange, bis der Isocyanatgehalt auf 1,1 % gefallen ist. Dann wird unter heftigem Rühren 400 g erwärmtes E-Wasser innerhalb von 10 Minuten zugegeben. Direkt im Anschluß wird 3,75 g Triäthylentetramin, gelöst in 37,5 g Wasser, schnell (ca. 5 min) zugetropft. Nach einer Reaktionszeit von 3 Stunden bei 80° C wird 5 ml 25%ige Ammoniaklösung zugegeben und abgekühlt. Man erhält eine pastöse Dispersion.

### Beispiel D1

Zu 200 g eines handelsüblichen Alkydharzes mit einem Ölgehalt von 68 % (z.B. Alftalat AR 680 100%) wird 140 g des Emulgators E1 zugegeben und bei 70 °C ca. 30 min gerührt bis die Mischung homogen ist. Nach Zugabe von 1 ml Ammoniakwasser (25%) wird 200 g auf 70 °C erwärmtes E-Wasser sehr langsam unter heftigem Rühren zugetropft (ca. 3 Stunden). Man erhält eine milchige strukturviskose Dispersion.

### Beispiel D2

Zu 200 g eines handelsüblichen Alkydharzes mit einem Ölgehalt von 56 % (Alftalat SAS 560 100%), das mit Cardura E10 auf eine Säurezahl unter 1 mg KOH pro g Harz gebracht wurde, wird 140 g des Emulgator E4 zugegeben und bei 70 °C ca. 30 min gerührt, bis die Mischung homogen ist. Nach Zugabe von 1 ml Ammoniakwasser (25%) wird 200 g auf 70 °C erwärmtes E-Wasser sehr langsam unter heftigem Rühren zugetropft (ca. 3 Stunden). Man erhält eine milchige strukturviskose Dispersion.

### Beispiel D3

Zu 200 g eines handelsüblichen Alkydharzes mit einem Ölgehalt von 63 % (Alftalat AS 632 100%), das mit Cardura E10 auf eine Säurezahl unter 1 gebracht wurde, wird 140 g des Emulgator E4 zugegeben und bei 70 °C ca. 30 min gerührt, bis die Mischung homogen ist. Nach Zugabe von 1 ml Ammoniakwasser (25%) wird die Mischung unter heftigem Rühren in auf 70 °C erwärmtes Wasser gegeben.

### Beispiel D4

Zu 200 g eines handelsüblichen ölfreien Polyesters mit einer OH-Zahl von 115 und einer Säurezahl von 5 (Alftalat AN 950) wird 140 g des Emulgator E4 zugegeben und bei 70 °C ca. 30 min gerührt, bis die Mischung homogen ist. Nach Zugabe von 1 ml Ammoniakwasser (25%) wird 200 g auf 70 °C erwärmtes E-Wasser sehr langsam unter heftigem Rühren zugetropft (ca. 3 Stunden). Man erhält eine milchige strukturviskose Dispersion.

Alle weiterhin aufgeführten Emulgatoren werden nach den oben beschriebenen Beispielen zu Dispersionen verarbeitet.

## Patentansprüche

1. Hydrophile Polyurethan-Polyharnstoffe erhältlich durch Umsetzung von:
(A) einer Polyisocyanatkomponente, bestehend aus mindestens einem organischen Polyisocyanat,
(B) mindestens einem mit Isocyanaten reaktiven Fettsäurederivat,
(C) gegebenenfalls einer Verbindung mit mehr als zwei funktionellen Gruppen ausgewählt aus Hydroxyl- und Carboxyl-Gruppen,
(D) einer Polyalkylenglykol-Komponente des Molmassenbereichs von 500 bis 10 000 g/mol und
(E) einer Verbindung mit mindestens einem aktiven Wasserstoffatom, das mit NCO-Gruppen schneller reagiert als Wasser,
unter Einhaltung eines Molverhältnisses von Isocyanat-Gruppen zur Summe von Wasserstoffatomen der gegenüber Isocyanat reaktiven Gruppen, bezogen auf alle Ausgangskomponenten (A) bis (E), von 0,5:1 bis 2:1.

2. Hydrophile Polyurethan-Polyharnstoffe gemäß Anspruch 1, dadurch gekennzeichnet, daß das Molverhältnis von Isocyanat-Gruppen zur Summe von Wasserstoffatomen der Hydroxy- und Amino-Gruppen, bezogen auf alle Ausgangskomponenten (A) bis (E), 0,7:1 bis 1,5:1 beträgt.

3. Hydrophile Polyurethan-Polyharnstoffe nach Anspruch 1, dadurch gekennzeichnet, daß pro 1 Mol der Komponente (A) 0,1 bis 1 Mol der Komponente (B), 0 bis 0,8 Mol der Komponente (C), 0,1 bis 0,8 Mol der Komponente (D) und 0,01 bis 0,3 Mol der Komponente (E) zum Einsatz gelangen.

4. Polyurethan-Polyharnstoffe nach Anspruch 1, dadurch gekennzeichnet, daß die Komponente (B) ungesättigt ist.

5. Polyurethan-Polyharnstoffe nach Anspruch 1, dadurch gekennzeichnet, daß die Komponente (B) ausgewählt ist aus den Fettalkoholen, den Fettaminen und den oxäthylierten Fettalkoholen und Fettaminen mit 1 bis 30 Äthylenoxideinheiten.

6. Polyurethan-Polyharnstoffe nach Anspruch 1, dadurch gekennzeichnet, daß die Komponente (B) ein oxäthylierter Fettalkohol mit 1 bis 20 Äthylenoxid-Einheiten ist.

7. Polyurethan-Polyharnstoffe nach Anspruch 1, dadurch gekennzeichnet, daß die Komponente (B) ein Umsetzungsprodukt aus einer Fettsäure mit einem Polyol, das gegebenenfalls noch Aminogruppen enthält, ist.

8. Polyurethan-Polyharnstoffe nach Anspruch 1, dadurch gekennzeichnet, daß die Komponente (B) ein Umsetzungsprodukt aus einer Fettsäure und einem Monoepoxid ist.

9. Polyurethan-Polyharnstoffe nach Anspruch 1, dadurch gekennzeichnet, daß die Komponente (C) eine Bishydroxyalkancarbonsäure ist.

10. Polyurethan-Polyharnstoffe nach Anspruch 1, dadurch gekennzeichnet, daß die Komponente (C) Dimethylolpropionsäure ist.

11. Verwendung der Polyurethan-Polyharnstoffe gemäß Anspruch 1 als Emulgatoren für ansonsten in Wasser nicht dispergierbare Kunstharze bei der Herstellung von wäßrigen Kunstharzdispersionen gegebenenfalls unter Verwendung weiterer Emulgatoren.
